# EUROPÄISCHE PATENTSCHRIFT

(11) **EP 0 425 724 B1**
(45) Veröffentlichungstag und Bekanntmachung des Hinweises auf die Patenterteilung: **26.05.1993**
(21) Anmeldenummer: 89120237.6
(22) Anmeldetag: 01.11.1989
(51) Int. Cl.: B29C 53/04

(54) **Biegemaschine**
Bending machine
Machine de pliage

(43) Veröffentlichungstag der Anmeldung: 08.05.1991
(73) Patentinhaber: Wegener GmbH, D-52015 Aachen (DE)
(72) Erfinder: Weissfloch, Reinhard, Dr.-Ing., D-5100 Aachen (DE)
(74) Vertreter: Paul, Dieter-Alfred, Dipl.-Ing.

(56) Entgegenhaltungen:
- DE-A- 3 637 436

## Beschreibung

Die Erfindung betrifft eine Biegemaschine zur Verarbeitung von Werkstücken aus thermoplastischem Kunststoff,
a) mit einer Biegewange zum Umbiegen des Werkstückes;
b) mit einem Anschlag zur Anlage des vorderen Endes des Werkstückes beim Einlegen in die Biegemaschine;
c) mit einer im Maschinenrahmen in und gegen die Transportrichtung des Werkstückes verfahrbaren Heizeinrichtung zum Plastifizieren von Biegelinien am Werkstück;
d) mit einer der Biegewange benachbarten, zumindest im Betrieb ortsfesten Klemmeinrichtung zum Einklemmen des Werkstückes nahe der Biegelinie bei einem Biegevorgang;
e) mit einer zur Klemmeinrichtung hin- und von dieser zurückfahrbaren Halteeinrichtung zum Fixieren des Werkstückes während der Heizphase der Heizeinrichtung.

Eine solche Biegemaschine stellt die Anmelderin her. Im mittleren Teil des Maschinenrahmens weist sie eine ortsfest angeordnete Klemmeinrichtung auf, der - in Transportrichtung des Werkstückes gesehen - eine schwenkbar aufgehängte, leistenförmige Biegewange nachgelagert ist. Hinter der Klemmeinrichtung sind eine Heizeinrichtung und eine Halteeinrichtung auf einem in und gegen die Transportrichtung verschiebbaren Rahmen angeordnet. Die Heizeinrichtung besteht aus zwei übereinander angeordneten, vertikal verfahrbaren Heizschwertern, hinter denen die Halteeinrichtung in Form einer Klemmleiste vorgesehen ist. Auf der anderen Seite der Biegewange ist eine Anschlagleiste vorgesehen, die auf zwei seitlichen Schienen verschiebbar gelagert ist.

Für einen Biegevorgang werden zunächst die Anschlagleiste und der Rahmen mit der Heizeinrichtung und der Halteeinrichtung symmetrisch zur Vorderkante der Biegewange eingestellt und fixiert. Dann wird von hinten ein zunächst in Form einer ebenen Platte vorliegendes Werkstück derart eingeschoben, daß es zwischen die Klemmleisten der Halteeinrichtung und den beiden Heizschwertern zu liegen kommt. Mit der Vorderkante liegt das Werkstück an Anschlägen im Bereich der Biegewange an. Die Heizschwerter werden dann zugefahren, so daß sie an beiden Seiten des Werkstückes anliegen und das Werkstück unter Bildung einer Biegelinie so erhitzen, daß es an der Biegelinie plastisch verformbar ist. Dabei wird das Werkstück sowohl von der Klemmeinrichtung als auch von der Halteeinrichtung festgehalten.

Wenn die Biegelinie genügend erwärmt ist, werden Klemm- und Halteeinrichtung deaktiviert, d. h. das Werkstück wird freigegeben. Es wird dann von Hand nach vorne in Richtung auf die Anschlagleiste verschoben, bis es dort zur Anlage kommt. Die Klemmeinrichtung wird anschließend wieder aktiviert, d. h. das Werkstück wird vor der Biegewange breitflächig abgestützt und festgeklemmt. Die Biegewange wird dann entsprechend dem gewünschten Biegewinkel hochgeschwenkt, so daß der vor der Klemmeinrichtung liegende Teile des Werkstückes an der Biegelinie hochgebogen wird. Gleichzeitig wird die nächste Biegelinie dadurch gebildet, daß die Heizschwerter wieder an dem dort befindlichen Teil des Werkstückes zur Anlage gebracht werden. Wenn der Biegevorgang abgeschlossen ist, werden die Klemm- und Halteeinrichtungen wieder gelöst und das Werkstück wieder bis zur Anschlagleiste nach vorn geschoben, so daß die erhitzte Biegelinie an der Vorderkante der Biegewange zu liegen kommt. Es schließt sich ein weiterer Biegevorgang an. Je nach Biegewinkel kann dann ein im Querschnitt mehreckiges, insbesondere quadratisches Rohrstück geformt werden.

Die Nachteile dieser Biegemaschine bestehen darin, daß ihre Einstellung zeitaufwendig ist, weil die Anschlagleiste und der Rahmen mit der Heiz- und Halteeinrichtung vor Beginn des Biegevorgangs jeweils genau und symmetrisch ausgerichtet werden müssen. Dieses Ausrichten ist gleichfalls notwendig, wenn unterschiedliche Seitenlängen verwirklicht werden müssen. Auch während des Betriebes ist die Handhabung umständlich, da die teilweise sehr schweren Werkstücke jeweils von Hand transportiert werden müssen. Dabei besteht eine nicht unerhebliche Unfallgefahr.

Diese Biegemaschine ist weiterentwickelt worden, um die Möglichkeit einer automatischen Steuerung des gesamten Biegevorgangs zu eröffnen und damit auch die Unfallgefahr zu verringern. Wie sich aus der DE-PS 36 37 436 ergibt, ist man hierzu von einer ortsfesten Anordnung der Klemmeinrichtung abgegangen und hat sie in und gegen die Transportrichtung des Werkstückes verfahrbar ausgebildet. Die Klemmeinrichtung dient dabei nicht mehr nur der Fixierung des Werkstückes beim Biegevorgang mittels der Biegewange. Sie übernimmt jetzt auch die Funktion der Halteeinrichtung bei der vorbekannten Biegemaschine, nämlich die Fixierung des Werkstückes während der Ausbildung der Biegelinie mittels der Heizeinrichtung. Hierzu ist die Klemmeinrichtung in geöffnetem Zustand aus einer der Biegewange benachbarten Stellung in eine bezüglich der Biegelinie von der Biegewange abgewandten Stellung verfahrbar und wird dann in Klemmstellung überführt. Nach Ausbildung der Biegelinie wird die Klemmeinrichtung wieder in Richtung auf die Biegewange verschoben und transportiert dabei das Werkstück mit der erhitzten Biegelinie bis zur Biegewange. Der Halteeinrichtung kommt bei dieser Biegemaschine nur noch die Funktion der Fixierung des Werkstückes zu, wenn die Klemmeinrichtung in deaktiviertem, also offenem Zustand von der Biegewange zurückgefahren wird.

Auf Grund dieser Ausbildung der Biegemaschine ist eine Handhabung nur noch für das Einlegen des Werkstückes notwendig. Alles weitere übernimmt dann die Biegmaschine selbst. Ein Eingriff in die Maschine von Hand mit den damit verbundenen Unfallgefahren ist nicht mehr notwendig. Dabei besteht die Möglichkeit, den Biegevorgang durch eine entsprechende Steuerung vollautomatisch ablaufen zu lassen, so daß nach Einlegen des Werkstückes und nach der Einstellung der Abstände zwischen zwei Biegelinien weitere Eingriffe nicht mehr erforderlich sind.

In besonderer Ausbildung ist bei der Biegemaschine nach der DE-PS 36 37 436 die Heizeinrichtung auf der Klemmeinrichtung angeordnet, so daß sie immer zusammen mit dieser verfahren wird. Die Halteeinrichtung kann in und gegen die Transportrichtung des Werkstückes verfahrbar sein und eine Blockiereinrichtung zu deren Lagefixierung gegenüber dem Maschinenrahmen aufweisen.

Die vorbeschriebene Biegemaschine ist konstruktiv sehr aufwendig und deshalb teuer. Außerdem hat sie den wesentlichen Nachteil, daß ihre Taktzeiten sehr hoch sind, d. h. es vergeht eine relativ lange Zeit zwischen zwei Biegevorgängen. Dies hängt damit zusammen, daß die Klemmeinrichtung während des Biegevorgangs und auch noch eine zeitlang nach dem Biegevorgang bis zum Aushärten der Biegelinie in der zur Biegewange benachbarten Stellung verbleiben muß. Hierdurch entsteht je nach Art und Dicke des Materials des Werkstückes ein Zeitverlust von mindestens 30̸ bis 40̸ Sekunden, häufig jedoch von einigen Minuten. Erst danach kann die Klemmeinrichtung zurückgefahren und eine neue Biegelinie mit Hilfe der Heizeinrichtung ausgebildet werden. Der Vorteil der Automatisierungsmöglichkeit und damit des Betriebes mit nur einer Bedienungsperson muß demnach mit gegenüber der Vorgängermaschine erheblich verlängerten Taktzeiten erkauft werden, insbesondere wenn dickwandige Werkstücke verarbeitet werden.

Der Erfindung liegt deshalb die Aufgabe zugrunde, eine Biegemaschine so auszubilden, daß einerseits - wie bei der Biegemaschine nach der DE-PS 36 37 436 - ein Transport des Werkstückes von Hand zwischen zwei Biegevorgängen nicht erforderlich ist, andererseits aber niedrige Taktzeiten bei geringem konstruktivem Aufwand erreicht werden.

Diese Aufgabe wird bei einer Biegemaschine der eingangs genannten Art erfindungsgemäß mit folgenden Merkmalen gelöst:
f) die Halteeinrichtung ist während des Betriebs der Biegemaschine frei bewegbar;
g) für die Verschiebung der Halteeinrichtung ist ein motorischer Verschiebeantrieb vorgesehen;
h) die Biegemaschine weist eine solche Steuerung auf,
   aa) daß die Halteeinrichtung in geschlossener Stellung mit dem festgeklemmten Werkstück bei geöffneter Klemmeinrichtung in Richtung auf die Biegewange verfahrbar ist,
   bb) daß die Halteeinrichtung nach dem Festklemmen des Werkstückes in der Klemmeinrichtung von dieser in geöffnetem Zustand zurückfahrbar ist und
   cc) daß die Heizeinrichtung nach dem Festklemmen des Werkstückes in der Klemmeinrichtung zwecks Ausbildung einer Biegelinie aktivierbar ist.

Bei der erfindungsgemäßen Biegemaschine wird also von dem aus der DE-PS 36 37 436 bekannten Prinzip, den Transport des Werkstückes mit Hilfe einer verfahrbaren Klemmeinrichtung zu bewirken, abgewichen. Hierfür wird erfindungsgemäß die Halteeinrichtung herangezogen und mit einem entsprechenden Antrieb und einer geeigneten Steuerung versehen.

Dies hat zunächst den Vorteil der konstruktiven Einfachheit. Es kann von der eingangs beschriebenen, ursprünglichen Version der Biegemaschine mit ortsfeste angeordneter Klemmeinrichtung ausgegangen werden. Die konstruktiven Abänderungen gegenüber dieser Version sind im Vergleich zu der nach der DE-PS 36 37 436 nicht sehr groß, da lediglich für eine freie Beweglichkeit der Halteeinrichtung gesorgt und diese mit einem Verschiebeantrieb und einer Steuerung kombiniert werden muß. Die zusätzliche Steuerung sorgt dann dafür, daß die Biegemaschine so betrieben wird, daß im Vergleich zur Biegemaschine nach der DE-PS 36 37 436 wesentlich geringere Taktzeiten erreicht werden.

Dies hängt damit zusammen, daß die Halteeinrichtung zwar den Transport des Werkstückes bei geöffneter Klemmeinrichtung bewirkt, nach Festklemmen des Werkstückes in der Klemmeinrichtung und damit unmittelbar anschließend wieder zurückverfahren werden kann, um mit Hilfe der Heizeinrichtung eine neue Biegelinie auszubilden. Es kann also die Zeit, die für das Umbiegen des Werkstückes und für die anschließende Aushärtung der Biegelinie erforderlich ist, für die Erhitzung und damit die Herstellung einer neuen Biegelinie genutzt werden. Da beide Vorgänge im wesentlichen die gleiche Zeit einnehmen, kann das Werkstück mit Hilfe der Halteeinrichtung nach Öffnen der Klemmeinrichtung, d. h. nach Abschluß des Biege- und Aushärtvorganges, wieder in Richtung auf die Biegewange verfahren werden. Pro Biegevorgang können deshalb mindestens 30̸ bis 40̸ Sekunden, in vielen Fällen mehrere Minuten eingespart werden.

Damit wird eine Biegemaschine bereitgestellt, die die Möglichkeit einer halb- oder vollautomatischen Steuerung durch eine Bedienungsperson bietet, sich aber gleichzeitig durch außerordentlich niedrige Taktzeiten und hohe Verarbeitungsgeschwindigkeit auszeichnet. Daß diese Vorzüge durch vergleichsweise einfache konstruktive Gestaltung der Biegemaschine erreicht werden, unterstreicht den Wert der Erfindung.

In Ausbildung der Erfindung ist vorgesehen, daß die Heizeinrichtung auf der Halteeinrichtung angeordnet ist, die Heizeinrichtung also immer zusammen mit der Halteeinrichtung verfahren wird. Auf diese Weise bedarf es keiner besonderen Steuerung zur Abstimmung der Bewegung der Heizeinrichtung und der Halteeinrichtung. Dabei ist es zweckmäßig, daß die Heizeinrichtung auch während des Transportes des Werkstückes zur Biegewange aktivierbar ist. Auf diese Weise kann der Zeitraum zum Verfahren des Werkstückes bis zur Biegewange für die Aufheizung der Biegelinie genutzt werden. Dabei ist unter Aktivierung die Einwirkung der Heizeinrichtung auf das Werkstück zum Zwecke der linienförmigen Erhitzung zu verstehen.

Die Halteeinrichtung kann in an sich bekannter Weise aus zumindest zwei gegeneinander bewegbaren Klemmleisten bestehen.

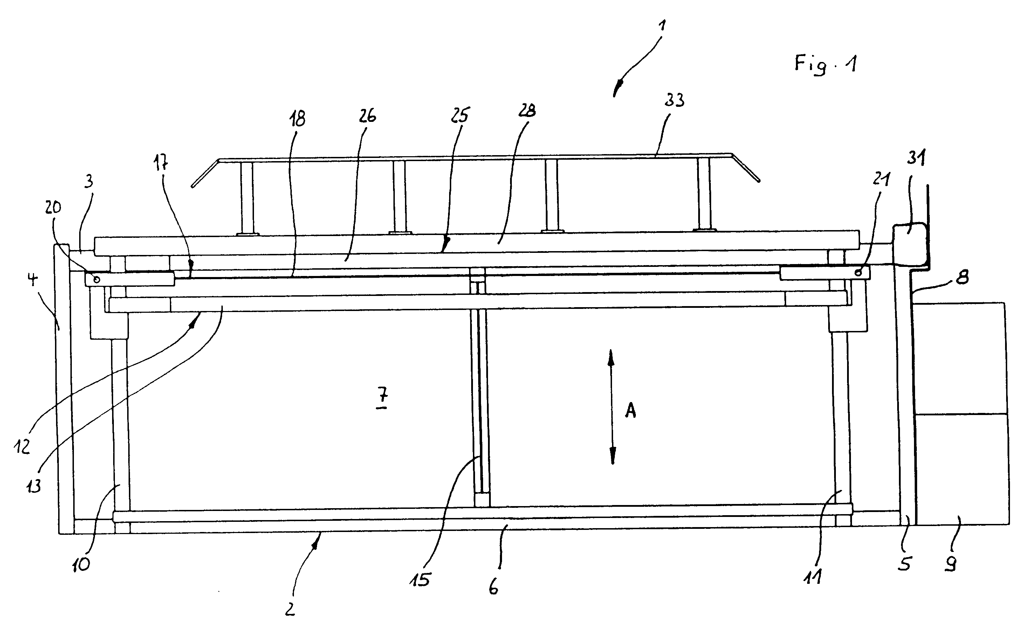

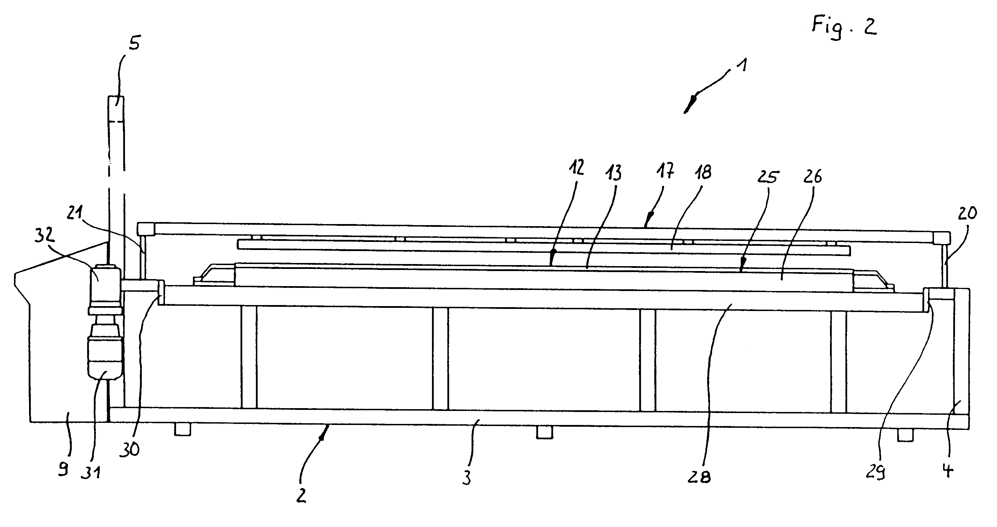

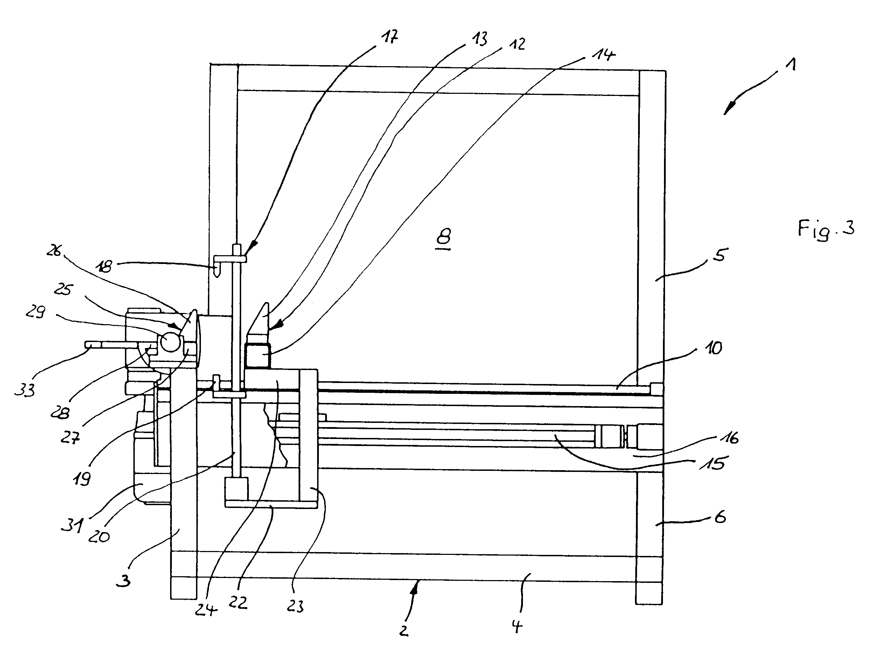

In der Zeichnung ist die Erfindung an Hand eines Ausführungsbeispiels näher veranschaulicht. Es zeigen:
- Figur (1): eine Draufsicht auf die Biegemaschine;
- Figur (2): eine Frontansicht der Biegemaschine gemäß Figur (1) von der Biegewange her gesehen;
- Figur (3): eine Seitenansicht der Biegemaschine gemäß den Figuren (1) und (2) mit Teilschnittdarstellungen.

Die in den Figuren dargestellte Biegemaschine (1) weist einen Maschinenrahmen (2) auf, der im wesentlichen gebildet wird von einem vorderen Rahmenabschnitt (3), zwei seitlichen Rahmenabschnitten (4, 5) und einem rückwärtigen Rahmenabschnitt (6). Die Rahmenabschnitte (3, 4, 5, 6) schließen ein innenseitig im wesentlichen freies Rechteck (7) ein.

Wie insbesondere aus den Figuren (2) und (3) zu ersehen ist, ist der seitliche Rahmenabschnitt (5) hochgezogen und dient dabei als Rahmen für eine Acrylglasscheibe (8). Außenseitig an diesen seitlichen Rahmenabschnitt (5) angesetzt ist ein Bedienungspult (9).

Jeweils benachbart der seitlichen Rahmenabschnitte (5, 6) und parallel dazu verlaufene Führungsstangen (10̸, 11), die sich zwischen dem vorderen Rahmenabschnitt (3) und dem rückwärtigen Rahmenabschnitt (6) erstrecken. Auf diesen Führungsstangen (10̸, 11) ist eine Halteeinrichtung (12) verschieblich in den Richtungen des Doppelpfeils A gelagert. Die Halteeinrichtung (12) besteht aus zwei übereinander angeordneten Klemmleisten (13, 14), von denen die obere Klemmleiste (13) mittels hier nicht näher dargestellter Pneumatikzylinder gegenüber der unteren Klemmleiste (14) anhebbar oder zwecks Festklemmen einer Kunststoffplatte in Richtung auf die untere Klemmleiste (14) absenkbar ist. Die untere Klemmleiste (14) ist mit einem kolbenstangenlosen Positionierzylinder (15) verbunden, der parallel und mittig zu den Führungsstangen (10̸, 11) angeordnet ist und auf einer sich zwischen dem vorderen Rahmenabschnitt (3) und dem rückwärtigen Rahmenabschnitt (6) erstreckenden Stützstrebe (16) angeordnet ist. Der Positionierzylinder (15) wird mittels Druckluft betrieben. Mit der Verschiebung der unteren Klemmleiste (14) wird auch die obere Klemmleiste (13) mitgenommen, d. h. sie behält insoweit ihre Stellung relativ zur unteren Klemmleiste (14) bei.

Mit der unteren Klemmleiste (14) der Halteeinrichtung (12) verbunden ist eine Heizeinrichtung (17). Sie weist zwei sich parallel zu den Klemmleisten (13, 14) erstreckende Heizschwerter (18, 19) auf, die im Abstand zueinander übereinander liegen und an seitlichen Führungsstangen (20̸, 21) vertikal verfahrbar geführt sind. Hierfür sind nicht näher dargestellte Pneumatikzylinder vorgesehen. Auf diese Weise können die Heizschwerter (18, 19) von oben bzw. von unten an eine in der Halteeinrichtung (12) zwischen den Klemmleisten (13, 14) eingeklemmte Kunststoffplatte herangefahren werden. Die Heizschwerter (18, 19) sind mittels elektrischer Energie erhitzbar.

Wie sich insbesondere aus Figur (3) ergibt, sind die Führungsstangen (20̸, 21) untenseitig an einer horizontalen Traverse (22) befestigt, welche über einen vertikalen Träger (23) und einen horizontalen Träger (24) mit der Unterseite der unteren Klemmleiste (14) verbunden ist. Beim Verfahren der Halteeinrichtung (12) wird also die Heizeinrichtung (17) mitgenommen, d. h. die Position der Heizschwerter (18, 19) in Bezug auf die Klemmleisten (13, 14) bleibt - abgesehen von ihren Höhenpositionen - gleich.

Auf dem vorderen Rahmenabschnitt (3) ist eine Klemmeinrichtung (25) angeordnet. Die Klemmeinrichtung (25) ist im wesentlichen gleich aufgebaut wie die Halteeinrichtung (12), weist also eine obere Klemmleiste (26) und eine untere Klemmleiste (27) auf. Die untere Klemmleiste (27) ist ortsfest angeordnet. Ihre Oberseite liegt auf der gleichen Höhe wie die Oberseite der unteren Klemmleiste (14) der Halteeinrichtung (12). Die obere Klemmleiste (26) der Klemmeinrichtung (25) ist mittels hier nicht näher dargestellten Pneumatikzylindern vertikal verfahrbar. In Offenstellung kann eine Kunststoffplatte zwischen die Klemmleisten (26, 27) geschoben und durch Absenken der oberen Klemmleiste (26) festgeklemmt werden.

Vor der Klemmeinrichtung (25), und zwar vor der unteren Klemmleiste (27), ist eine Biegewange (28) angeordnet. Sie erstreckt sich im wesentlichen über die Breite des Maschinenrahmens (2) und ist in Schwenklagern (29, 30̸) um eine horizontale Achse aus der in Figur (3) gezeigten, horizontalen Stellung in eine vertikale Stellung verschwenkbar. Hierzu dient ein Elektromotor (31), dessen Drehmoment über ein Winkelgetriebe (32) auf die Biegewange (28) übertragen wird. In horizontaler Stellung fluchtet die Oberseite der Biegewange (28) mit den Oberseiten der unteren Klemmleisten (15) bzw. (27) der Halteeinrichtung (12) bzw. der Klemmeinrichtung (25). An der Biegewange (28) ist zusätzlich ein Stützgestell (33) angebracht, das den umzubiegenden Teil der Kunststoffplatte zusätzlich abstützt.

Mit der gezeigten Biegemaschine (1) gestaltet sich ein Biegevorgang wie folgt.

Zunächst wird die Halteeinrichtung (12) vom Bedienungspult (9) her in die gezeigte vordere Endstellung gebracht, um für die Steuereinrichtung eine Null-Lage zu definieren. Die Klemmleisten (13, 14) der Halteeinrichtung (12) und die Klemmleisten (26, 27) der Klemmeinrichtung (25) werden in Offenstellung angehoben. Ferner wird die Biegewange (28) gegenüber der in Figur (3) dargestellten Stellung um 90̸° nach oben verschwenkt, um einen Anschlag zu bilden. Es kann dann eine Kunststoffplatte von hinten zwischen zunächst die Klemmleisten (13, 14) der Halteeinrichtung (12) und dann weiter nach vorn zwischen die Klemmleisten (26, 27) der Klemmeinrichtung (25) eingeschoben werden, bis sie mit ihrer Vorderkante an der Biegewange (28) zur Anlage kommt.

In die Steuereinrichtung wird nun der Abstand eingegeben, in dem die Biegelinie zur an der Biegewange (9) anliegenden freien Kante der Kunststoffplatte zu liegen kommen soll. Der weitere Ablauf wird dann entweder von Hand, also halbautomatisch, oder durch entsprechende Programmierung der Steuereinrichtung vollautomatisch gesteuert.

Zunächst wird die Klemmeinrichtung (25) durch Absenkung der oberen Klemmleiste (26) geschlossen und damit die Kunststoffplatte in ihrer Stellung fixiert. Anschließend wird die Halteeinrichtung (12) in geöffnetem Zustand durch entsprechende Ansteuerung des Positionierzylinders (15) nach hinten, also von der Klemmeinrichtung (25) weg verfahren, und zwar um einen solchen Betrag, daß die Heizschwerter (18, 19) nach dem Anhalten der Halteeinrichtung (12) oberhalb der vorgesehenen Biegelinie zu stehen kommen. Die Kunststoffplatte wird dann durch Absenken der oberen Klemmleiste (13) in der Halteeinrichtung (12) festgeklemmt. Gleichzeitig werden die beiden Heizschwerter (18, 19) einander angenähert, bis sie an der Oberseite bzw. der Unterseite der Kunststoffplatte zur Anlage gekommen sind. Sie erhitzen dann den Kunststoff im Bereich der vorgesehenen Biegelinie so stark, daß er plastifiziert und biegsam wird.

Wenn die Biegelinie genügend stark erhitzt ist, wird die Klemmeinrichtung (25) durch Hochfahren der oberen Klemmleiste (26) geöffnet. Dann wird die Halteeinrichtung (12) durch entsprechende Ansteuerung des Positionierzylinders (15) wieder in Richtung auf die Biegewange (28) verfahren. Gleichzeitig werden die Heizschwerter (18, 19) von der Kunststoffplatte gelöst und so weit nach oben bzw. nach unten verfahren, daß sie beim weiteren Vorfahren der Halteeinrichtung (12) nicht mit der Klemmeinrichtung (25) bzw. der Biegewange (28) kollidieren können. Der horizontale Abstand zwischen den Heizschwertern (18, 19) und den Klemmleisten (13, 14) der Halteeinrichtung (12) ist so bemessen, daß die erhitzte Biegelinie bei Erreichen der vorderen Endstellung der Halteeinrichtung (12) etwa oberhalb der Hinterkante der Biegewange (28) zu liegen kommt.

Anschließend wird die Klemmeinrichtung (25) durch Absenken der oberen Klemmleiste (26) zugefahren und damit die Kunststoffplatte festgeklemmt. Dann wird der Elektromotor (31) in der Weise angesteuert, daß die Biegewange (28) zusammen mit dem Stützgestell (33) hochgeschwenkt wird. Hierdurch wird der auf der Biegewange (28) aufgeschobene Teil der Kunststoffplatte entsprechend hochgebogen, wobei durch geeignete Eingabe an die Steuereinrichtung jeder beliebige Winkel einstellbar ist.

Unmittelbar nach Festklemmen der Kunststoffplatte in der Klemmeinrichtung (25), also noch während des Biegevorgangs, wird die Verklemmung der Kunststoffplatte in der Halteeinrichtung (12) durch Hochfahren der oberen Klemmleiste (13) gelöst und die Halteeinrichtung (12) mittels des Positionierzylinders (15) nach hinten verfahren, bis die Heizschwerter (18, 19) wieder mit der nächsten, vorgesehenen Biegelinie fluchten. Der Abstand zur ersten Biegelinie kann durch entsprechende Eingabe in die Steuereinrichtung festgelegt werden, d. h. dieser Abstand kann derselbe sein wie beim ersten Biegevorgang, es kann jedoch auch ein anderer Abstand vorgegeben werden. Nach Anhalten der Halteeinrichtung (12) wird die Kunststoffplatte durch Absenken der oberen Klemmleiste (13) festgeklemmt und werden die Heizschwerter (18, 19) von oben bzw. von unten an die Oberflächen der Kunststoffplatte zur Anlage gebracht.

Die Ausbildung einer weiteren Biegelinie erfolgt somit während des Biege- und Aushärtvorgangs an der vorangegangenen Biegelinie. Wenn dieser Vorgang abgeschlossen ist und die neue Biegelinie hinreichend erhitzt ist, wiederholt sich der vorbeschriebene Ablauf, d. h. die Halteeinrichtung (12) wird unter Verklemmung der Kunststoffplatte geschlossen und nach Öffnen der Klemmeinrichtung (25) in Richtung auf die Biegewange (28) verfahren, wobei die Heizschwerter (18, 19) von der Kunststoffplatte wegbewegt werden. Nach Erreichen der vorderen Endstellung der Halteeinrichtung (12) schließt sich ein weiterer Biegevorgang in vorbeschriebener Weise an.

Auf diese Weise kann - wenn gewünscht - ein geschlossener Hohlkörper gebildet werden, dessen einzige offene Stelle ein Schlitz ist, der anschließend von einer entsprechenden Schweißeinrichtung geschlossen werden kann.

## Patentansprüche

1. Biegemaschine (1) zur Verarbeitung von Werkstücken aus thermoplastischem Kunststoff,
a) mit einer Biegewange (28) zum Umbiegen des Werkstückes;
b) mit einem Anschlag zur Anlage des vorderen Endes des Werkstückes beim Einlegen in die Biegemaschine (1);
c) mit einer im Maschinenrahmen (2) in und gegen die Transportrichtung des Werkstückes verfahrbaren Heizeinrichtung (17) zum Plastifizieren einer Biegelinie im Werkstück;
d) mit einer der Biegewange (28) benachbarten, zumindest im Betrieb ortsfesten Klemmeinrichtung (25) zum Einklemmen des Werkstückes nahe der Biegelinie bei einem Biegevorgang;
e) mit einer zur Klemmeinrichtung (25) hin und von dieser zurückfahrbaren Halteeinrichtung (12) zum Fixieren des Werkstückes während der Heizphase der Heizeinrichtung (17);
gekennzeichnet durch folgende Merkmale:
f) die Halteeinrichtung (12) ist während des Betriebes der Biegemaschine (1) frei bewegbar;
g) für die Verschiebung der Halteeinrichtung (12) ist ein motorischer Verschiebeantrieb (15) vorgesehen;
h) die Biegemaschine (1) weist eine solche Steuerung auf,
aa) daß die Halteeinrichtung (12) in geschlossener Stellung mit dem festgeklemmten Werkstück bei geöffneter Klemmeinrichtung (25) in Richtung auf die Biegewange (28) verfahrbar ist,
bb) daß die Halteeinrichtung (12) nach dem Festklemmen des Werkstückes in der Klemmeinrichtung (25) von dieser im geöffneten Zustand zurückfahrbar ist;
cc) daß die Heizeinrichtung (17) nach dem Festklemmen des Werkstückes in der Klemmeinrichtung (25) zwecks Ausbildung einer Biegelinie aktivierbar ist.

2. Biegemaschine nach Anspruch 1,
dadurch gekennzeichnet, daß die Heizeinrichtung (17) auf der Halteeinrichtung (12) angeordnet ist.

3. Biegemaschine nach Anspruch 1 oder 2,
dadurch gekennzeichnet, daß die Heizeinrichtung (17) auch noch während des Verfahrens in der Halteeinrichtung (12) in Richtung auf die Klemmeinrichtung (25) aktivierbar ist.

4. Biegemaschine nach einem der Ansprüche 1 bis 3,
dadurch gekennzeichnet, daß die Halteeinrichtung (12) aus zumindest zwei gegeneinander bewegbaren Klemmleisten (13, 14) besteht.

## Claims

1. A bending machine (1) for processing workpieces made from thermoplastic synthetic material,
a) with a bending cheek (28) for bending the workpiece;
b) with a stop for contacting the front end of the workpiece when it is inserted in the bending machine (1);
c) with a heating device (17) in the machine frame (2) which can move in and towards the direction of transport of the workpiece for plasticising a bend line in the workpiece;
d) with a clamping device (25), which is adjacent to the bending cheek (28) and which is fixed in position at least in operation, for clamping the workpiece near the bend line during a bending operation;
e) with a holding device (12) which can move towards and can move back from the clamping device (25) for fixing the workpiece during the heating phase of the heating device (17);
characterised by the following features:
f) the holding device (12) is freely movable during the operation of the bending machine (1);
g) a motorised displacement drive (15) is provided for the displacement of the holding device (12);
h) the bending machine (1) has a control system such that
aa) the holding device (12) can move, in its closed position with the workpiece clamped, in a direction on to the bending cheek (28) with the clamping device (25) opened,
bb) after the workpiece has been clamped in the clamping device (25), the holding device (12) can be moved in its opened state back from the latter,
cc) after the workpiece has been clamped in the clamping device (25), the heating device (17) can be activated for the purpose of forming a bend line.

2. A bending machine according to claim 1, characterised in that the heating device (17) is disposed on the holding device (12).

3. A bending machine according to claims 1 or 2, characterised in that the heating device (17) can also still be activated during its travel in the holding device (12) in a direction on to the clamping device (25).

4. A bending machine according to any one of claims 1 to 3, characterised in that the holding device (12) consists of at least two clamping strips (13, 14) which can move in relation to each other.

## Revendications

1. Machine de pliage (1) pour façonner des pièces en matériau thermoplastique, avec
a) une barre de pliage (28) pour plier la pièce travaillée ;
b) une butée pour l'application de l'extrémité avant de la pièce lors de son introduction dans la machine de pliage (1) ;
c) un dispositif de chauffage (17), mobile en translation dans le bâti de machine (2) dans la direction de transport de la pièce et en direction contraire, pour rendre plastique une ligne de pliage sur la pièce ;
d) un dispositif de serrage (25), voisin de la barre de pliage (28) et stationnaire au moins pendant l'exploitation, pour serrer la pièce au voisinage de la ligne de pliage lors d'un pliage ;
e) un dispositif de maintien (12), pouvant être déplacé vers le dispositif de serrage (25) et en retour de ce dernier, pour fixer en position la pièce pendant la phase de chauffage du dispositif de chauffage (17) ;
**caractérisée** par les caractéristiques suivantes :
f) le dispositif de maintien (12) peut se déplacer librement pendant l'exploitation de la machine de pliage (1) ;
g) un entraînement motorisé en translation (15) est prévu pour le déplacement du dispositif de maintien (12) ;
h) la machine de pliage (1) présente une commande telle que
aa) le dispositif de maintien (12), en position fermée avec la pièce bloquée par serrage, peut être déplacé en direction de la barre de pliage (28) lorsque le dispositif de serrage (25) est ouvert,
bb) le dispositif de maintien (12) peut, une fois la pièce bloquée par serrage dans le dispositif de serrage (25), être déplacé en retour de ce dernier à l'état ouvert,
cc) le dispositif de chauffage (17) peut, une fois la pièce bloquée par serrage dans le dispositif de serrage (25), être activé afin de former une ligne de pliage.

2. Machine de pliage selon la revendication 1, **caractérisée** en ce que le dispositif de chauffage (17) est disposé sur le dispositif de maintien (12).

3. Machine de pliage selon la revendication 1 ou 2, **caractérisée** en ce que le dispositif de chauffage (17) peut aussi être activé pendant le déplacement du dispositif de maintien (12) en direction du dispositif de serrage (25).

4. Machine de pliage selon l'une quelconque des revendications 1 à 3, **caractérisée** en ce que le dispositif de maintien (12) est constitué d'au moins deux barres de serrage (13, 14), mobiles l'une par rapport à l'autre.
